Europäisches Patentamt

European Patent Office

Office européen des brevets

(19)

(11) Publication number: 0 306 838
A2

# (12) EUROPEAN PATENT APPLICATION

(21) Application number: 88114287.1

(22) Date of filing: 01.09.88

(51) Int. Cl.4: C08G 63/62

(30) Priority: 05.09.87 JP 222834/87

(43) Date of publication of application:
15.03.89 Bulletin 89/11

(84) Designated Contracting States:
BE CH DE FR GB IT LI NL SE

(71) Applicant: IDEMITSU PETROCHEMICAL CO.
LTD.
1-1, Marunouchi 3-chome Chiyoda-ku
Tokyo(JP)

(72) Inventor: Shizawa, Tatsuji
Idemitsu Petrochem. Co. Ltd. 1-1,
Anegasakikaigan
Ichihara-shi Chiba-ken(JP)
Inventor: Inoue, Yoshiharu
Idemitsu Petrochem. Co. Ltd. 1-1,
Anegasakikaigan
Ichihara-shi Chiba-ken(JP)
Inventor: Santa, Takahisa
Idemitsu Petrochem. Co. Ltd. 1-1,
Anegasakikaigan
Ichihara-shi Chiba-ken(JP)

(74) Representative: Patentanwälte TER MEER -
MÜLLER - STEINMEISTER
Mauerkircherstrasse 45
D-8000 München 80(DE)

(54) Process of preparing polycarbonates.

(57) This invention is concerned with a process of preparing a polycarbonate from phosgene and a bisphenol by two-step polycondensation, accompnied by the recycling of unreacted bisphenol. The two-step polycondensation consists of prepolycondensation whereby polycarbonate olygomer is formed from phosgene and a bisphenol and main polycondensation whereby an intended polymer is formed from said polycarbonate olygomer produced by said prepolycondensation. Besides automatic optimum control of the feeding of phosgene and bisphenol to the prepolycondensation system, the bisphenol including the recycled bisphenol from the main polycondensation system, is conducted by means of a feed control system comprising at least one of automatic analyzers for determining the chloroformate end of said polycarbonate olygomer formed in the prepolycondensation system and for determining the remaining unreacted bisphenol in the polycondensation product formed in the main polycondensation system, respectively, and valves for the feeding of phosgene and the bisphenol, respectively, to the prepolycondensation system and automatically cotrolled in accordance with data obtained by said automatic analyzers.

## Process of preparing polycarbonates

## BACKGROUND OF THE INVENTION

### (1) Field of the Invention

The present invention relates to a process of preparing polycarbonates uniform in quality, particularly in heat resistance and steam resistance by the polycondensation of a bisphenol and phosgene under optimal control of stock feed to the polycondensation system.

### (2) Description of the Prior Art

For preparing polycarbonates there are two processes: one based on the ester interchange between a bisphenol and a diphenol carbonate without using solvent, and the other based on the reaction of a bisphenol and phosgene in the presence of solvent.

The former process is simple but disadvantageous in obtaining high molecular weight polycarbonates with difficulty compared with the latter. For this reason, high molecular weight polycarbonates are produced mainly from phosgene and bisphenol A.

It is important for the preparation polycarbonate from bisphenol and phosgene to strictly control the polycondensa tion conditions: amount of phosgene to be added, rate of the addition, reaction temperature, amounts of alkali and solvent to be added, agitation, etc., otherwise it would result in, for example, remaining of impurities such as unreacted monomer in reaction product and dispersion in average molecular weight of the reaction product as measured by the viscosity technique.

These difficulties reflect low quality of the reaction product, for example, lowered heat and steam resistances.

Countermeasures against these difficulties, for instance, fully removing impurities from reaction product can be by more powered separation and washing, this however being impossible without needing considerably larger equipment and more water.

Under the circumstances, there has been demand for solution of the above-mentioned problems without causing new related problems.

## SUMMARY OF THE INVENTION

It is an object of the invention to remove the above-mentioned difficulties in prior art.

The object has been achieved by the present invention as the result of study in various ways.

The invention is based on the concept that polycar bonate is continuously produced from phosgene and a bisphenol, accompanied by the recycling of unreacted bisphenol, under control of the feeding of these materials, thus to obtain polycarbonate with minimized remaining monomer.

In detail, the invention is concerned with a process of preparing a polycarbonate from phosgene and a bisphenol by two-step polycondensation of them, accompanied by the recycling of unreacted bisphenol, the two-step polycondensation consisting of prepolycondensation whereby polycarbonate olygomer is formed from phosgene and a bisphenol and main polycondensation whereby an intended polymer is formed from the polycarbonate olygomer produced by the precondensation; under automatic optimum control of the feeding of phosgene and the bisphenol to the prepolycondensation system, the bisphenol including the recycled bisphenol from the main polycondensation system, by means of an automatic control system being provided with at least one of automatic analyzers for determining the chloroformate end of the polycarbonate olygomer formed by prepolycondensation and for determining unreacted bisphenol remaining in the polycondensation product formed by main polycondensation, respectively, and valves for the feeding of phosgene and the bisphenol, respectively, to the prepolycondensation system and automatically controlled in accordance with data obtained by the automatic analyzer.

## BRIEF DESCRIPTION OF THE DRAWINGS

Fig.1 is a flow diagram of of a process embodying the present invention; and

Figs. 2a and 2b are flow charts of the automatic control system for use in the process.

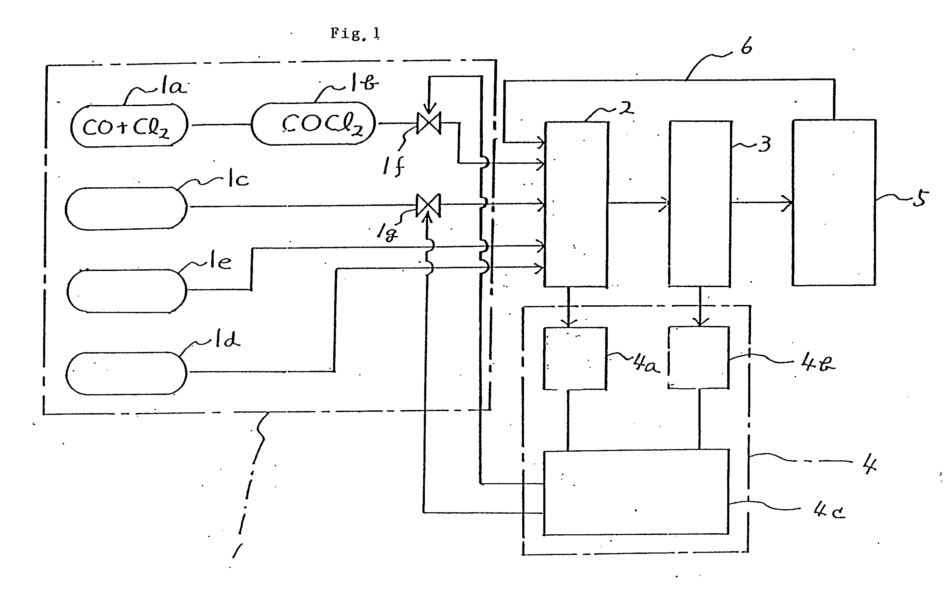

In Fig. 1, reference numerals designate as 1 stock feeding system, 2 prepolycondensation system, 3 main polycondensation, 4 automatic control system, and 5 reaction product processing system including separation and washing.

## DESCRIPTION OF THE PREFERRED EMBODIMENTS

The process according to the invention can be applied with effects to continuous production of polycarbonates from a bisphenol, such as bisphenol A, and phosgene, particularly to continuous interfacial polycondensation technique.

The process according to the invention will be in detail described in the following.

The inventors has found out the fact that it is necessary for the preparation of polycarbonates by the above-mentioned two-step polycondensation to monitor chloroformate formed as an intermediate and/or unreacted bisphenol remaining in the polycondensation product aqueous phase, and to transmit data obtained thereby to the stock feeding system, thus to control stock feeding in real time.

The inventors has further found out that unbalanced stock composition and chemical unbalance in the polycondensation system, if they occur by late control, will result in abnormally greater dispersion of average molecular weight of polycondensation product, as measured by the viscosity technique, and in turn increased washing load for removing impurities.

The process according to the invention is characterized by removing unreacted bisphenol in the processing of polycondensation product to obtain polycarbonate, and recycling it to the prepolycondensation system for reusing it as reactant.

As described above, the process of preparing polycarbocnates according to the present invention is further characterized, for achieving the object of improving quality of them, by maintaining optimum stock feeding rate by means of an automatic control system including at least one of automatic analyzers for determining the chloroformate group of the polycarbonate olygomer of an intermediate formed by prepolycondensation, and for determining unreacted bisphenol remaining in the polycondensation product aqueous phase, respectively, and transmitting data obtained by the automatic analyzer to the stock feeding system.

The process accordig to the present invention is further characterized by two-step polycondensation consisting of prepolycondensation whereby polycarbonate olygomer is formed from phosgene and a bisphenol, and main polycondensation whereby the polycarbonate olygomer produced by the prepolycondensation is further polycondensed to higher molecule polycarbonate.

A further preferred embodiment of the invention is provided with both automatic analyzers above-mentioned, particularly in the construction that the automatic analyzer for determining chloroformate group is disposed in the prepolycondensation system and the automatic analyzer for determining unreacted bisphenol in the polycondensation product solution is disposed in the main polycondensation system.

The invention will be described more fully with reference to the accompnying drawings hereinafter:

Fig.1 is a flow diagram of a process of preparing polycarbonates embodying the present invention, which comprises stock feeding system 1, prepolycondensation system 2, main polycondensation system 3, an automatic control system 4, a polycondensation product processing system 5 including separation and washing and recycle line 6.

The stock feeding system 1 is composed of a reaction tank 1a in which carbon monooxide and chlorine react to phosgene, a phosgene reservoir 1b for storing phosgene conveyed from the reaction tank, a bisphenol tank 1c in which a bisphenol is stored, a solvent tank 1d in which a solvent is stored, a molecule regulating agent reservoir 1e in which a molecule regulating agent is stored, and lines through which individual materials are conveyed from the reservoir or tanks to the prepolycondensation system.

The lines for conveying phosgene and bisphenol each are provided with first and second flow-control valves 1f, 1g, through which the later-described automatic control for the feeding of phosgene and bisphenol, respectively, is carried out.

The process illustrated in Fig.1 includes a stage of preparing phosgene, which is not always necessary, and commercially-available phosgene may be directly used.

3

Any bisphenol, if suitable as raw material for preparation of polycarbonates, can be used in the present invention without being limited, and examples of it are listed as follows: bis(4-hydroxyphenyl)alkanes, such as biphenyl-4-4'-diol, 3,5,3',5'-tetrahydroxybiphenyl, bis(4-hydroxyphenyl)methane, 1,2-bis(4-hydroxyphenyl)ethane, 1,1-bis(4-hydroxyphenyl)ethane, 1,3-bis(4-hydroxyphenyl)propane, 1,2-bis(4-hydroxyphenyl)propane, 1,1-bis(4-hydroxyphenyl)propane, 2,2-bis(4-hydroxyphenyl)propane (Another name:bis phenol A), 1,1-bis(4-hydroxyphenyl)butane, 2,2-bis(4-hydroxyphenyl)butane, 1,4-bis(4-hydroxyphenyl)-butane, 3,3-bis(4-hydroxyphenyl)pentane, 2,2-bis(4-hydroxyphenyl)butane, 2,2-bis(3,5-dimethyl-4-hydroxyphenyl)propane (Another name: tetramethylbisphenol A), 2,2-bis(3-methyl-4-hydroxyphenyl)propane, 2-(hydroxyphenyl)-2-(3-methyl-4-hydroxyphenyl)propane, etc.; bis(4-hydroxyphenyl)alkenes, such as 1,2-bis-(hydroxyphenyl)ethylene; 1,4-bis(4-hydroxyphenyl)cyclohexane; 1,4-bis(4-hydroxyphenyl)cyclohexene; bis-(substituted-4-hydroxyphenyl)alkanes, such as 2,2-bis(3,5-dichloro-4-hydroxyphenyl)propane (Another name: tetrachlorobisphenol A), 2,2-(3,5-dibromo-4-hydroxyphenyl)propane (Another name:tetrabromobisphenol A), 2,2-bis(3-chloro-4-hydroxyphenyl)propane, 2-(3,5-dichloro-4-hydroxyphenyl)-2-(4-hydroxyphenyl)propane, 2,2-bis(3-chloro-4-hydroxy-5-methylphenyl)propane, 2,2-bis(3-bromo-4-hydroxyphenyl)propane, etc.; 4-hydroxyphenylethers, such as di(4-hydroxyphenyl)ether, di(3.5-dimethyl-4-hydroxyphenyl)ether, etc.; 4-hydroxyphenylthioethers, such as di-(4-hydroxyphenyl)thioether; and di(4-hydroxyphenyl)ketones, such as di(4-hydroxyphenyl)ketone.

These can be used alone or in combination of two or more.

Functional derivatives of the above-listed bisphenols can be used in the present invention, too.

Suitable molecular weight regulating agents for use in the present invention are, for example, alcohols such as methanol, ethanol, and propanol, and phenols such as phenol, p-tert-butyl phenol, cumyl phenol, iso-propyl phenol etc..

Examples of suitable solvents for use are chlorine-substituted hydrocarbons, such as methylene chloride, and cyclic oxy compounds, such as dioxane.

In the prepolycondensation system 2, polycondensation of a bisphenol and phosgene from the stock feeding system 1 is proceeded to make polycarbonate olygomer.

It is desired that the polycarbonate olygomers produced in the prepolycondensation system 2 are 2 to 20, preferably 2 to 4 in average degree of polymerization.

To equip with an automatic analyzer 4a for chaloroformate group as above-described is important also from the viewpoint of regulating average degree of polymerization.

In the main polycondensation system 3, polycarbonate olygomer formed in the prepolycondensation system 2 and the bisphenol are further polycondensed to higher molecule polycarbonate.

The polycondensation product of polycarbonate obtained in the main polycondensation system 3 has an average molecular weight of usually 1,000 to 100,000, as measured by the viscosity technique, though the value cannot be ab solutely defined because of varying with usage.

The automatic analyzer 4b for determining remaining unchanged bisphenol is preferred to be provided in the main polycondensation system 3 also from the viewpoint of the regulation of the average molecular weight.

The polycondensation product processing 5 comprises, for example, a first separation for separating the polycondensation product solution in the main polycondensation system into organic and aqueous phases, washing of the organic phase containing polycarbonate with alkali, acid and water, a second separation for separating the washed solution into organic and aqueous phases, a third separation for separating polycarbonate by distilling off the organic solvent of the second organic phase or by the addition of precipitant, drying the resulting polycarbonate product on a thin-film dryer or a biaxial mill, and molding the dried polycarbonate into pellets.

In the product processing, unreacted bisphenol in the aqueous phases obtained by the first and second separations, respectively, is recycled through the line 6.

The line 6 through which unreacted bisphenol removed in the product processing is recycled to the prepolycondensation system 2 is suitable constructed of duct and pump.

The recycle of unreacted bisphenol removed in the product processing through line 6 to the prepolycondensation system 2 must be carried out under automatic control in order to keep balanced stock feeding to the prepolycondensation system because otherwise polycarbonate produced by the polycondensation might be of abnormally-dispersed molecular weight, contain impurities, and in turn have lowered heat and steam resistances. For this reason an automatic control system for stock feeding is equipped as an important feature of the present invention.

The automatic control system 4 comprises the automatic analyzer 4a for automatically determining chloroformate group in the prepolycondensation system 2, the automatic analyzer 4b for determining unreacted bisphenol polycondensation solution in the main polycondensation system, and a control operation system 4c for receiving measurement data transmitted from the analyzers (4a, 4b), calculating out optimum stock feed to the prepolycondensation system 2, and constructed to accomplish the automatic control through the first and second feed valves 1f, 1g.

The automatic chloroformate analyzer 4a is based on the following analytical procedure, for example, comprising hydrolyzing with KOH-methanol solution a sample from the prepolycondensation system, extracting with water, and determining chlorine in the aqueous phase by the mercuric thiocyanate color-development technique; or comprising dissolving a sample in chloroform, adding a small volume of pyridine and ethanol, heating the mixture to convert the chloroformate end into alcohol end, and determining the released chlorine by the argentmetric titration or color-development method. As the analyzer can be used commercially-available, such as an automatic titration monitor Model: ALT-100 (Hiranuma Sangyo Co., Ltd. Japan).

The automatic chloroformate analyzer 4a is combined with the prepolycondensation system 2 and make determination of chloroformate group contained in the system at intervals of 10 minutes to 2 hours, and outputs the obtained data to the control operation system 4c, which outputs control signals to the first feed valve 1f, and thereby makes the control of phosgene feed.

The automatic bisphenol analyzer 4b makes determination of unreacted bisphenol in the main polycondensation system 3. To the analyzer is applied analysis utilizing, for example, IR spectrum or NMR spectrum, gaschromatography or titration analysis.

As the analyzer can be used commercially-available, such as an automatic titration monitor Model: ALT-100 (Hiranuma Sangyo Co., Ltd. Japan). This model can automatically titrate samples by hydrogen chloride and determin end point of titration by potential difference.

Automatic determination of bisphenol by this analyzer is carried out under the same timing as detemination of chloroformate group, for example, at intervals of 10 minutes to 2 hours. Obtained data is provided to the control operation system 4c, which output control signals to the second feed valve 1g, thus feeding of unreacted bisphenol being controlled.

Intervals for continuous monitoring on both ingredients are favorable to be 10 minutes to 2 hours because intervals up to 10 minutes cannot create practical effect matched for the correspondingly-increased times of determination, and on the other hand, at intervals beyond 2 hours, substantially the same in efficiency as conventional hand-operated analysis results.

The control operation system 4c processes data (chloroformate value: X) output from the automatic chloroformate group analyzer 4a and data (unreacted bisphenol value Y) output from the automatic unreacted monomer analyzer 4b and calculated out optimum feeds of stock, that is, phosgene and bisphenol to the prepolycondensation system 2, and output control signals to the first and second feed valves 1f, 1g for regulating stock feeding.

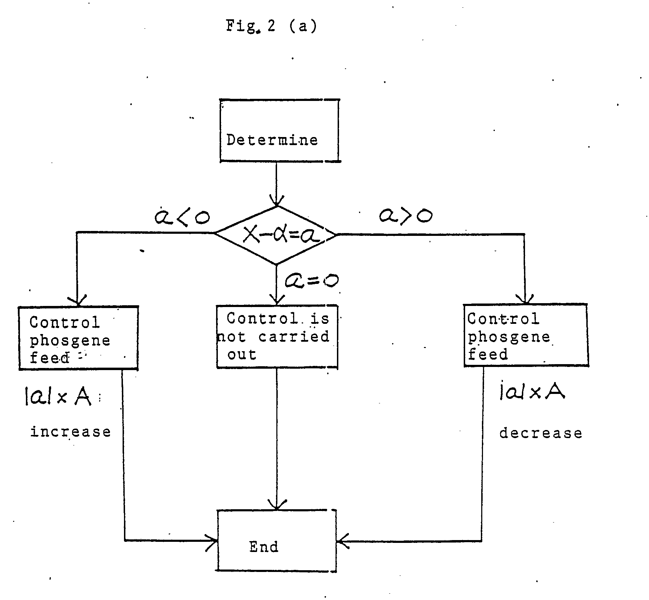

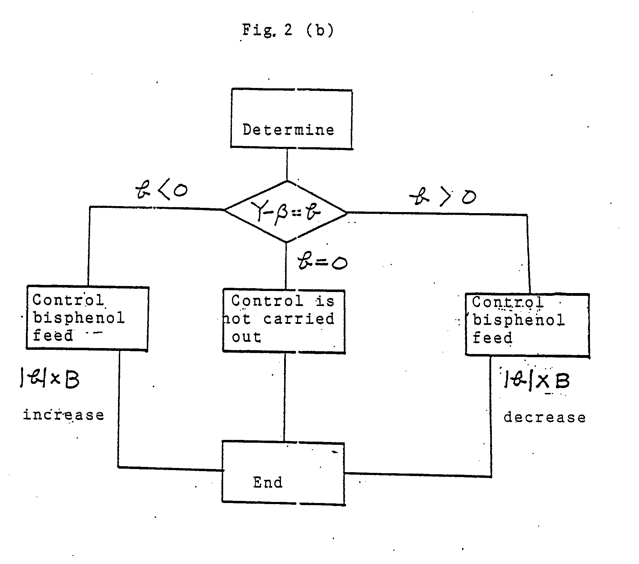

In the following the function of the control operation system will be described in detail: The control of the valves are carried out on the basis of the obtained-X and Y as illustrated in the flow charts (Figs.2a and 2b).

The control operation system receives the analytic values X or Y, and controls on the basis of this, the first and second feed valves as illustrated in the flow charts (Figs.2a and 2b).

As illustrated in Fig.2a, data X output from the automatic analyzer 4a is compared with chloroformate value in stationary state of reaction ($\alpha$), and if a ($= X-\alpha$) is positive, the first feed value 1f is so adjusted to reduce phosgene feed by $|a| \times A$ (A is a constant determined by a scale of an apparatus), and if a is negative, it is so adjusted to increase the same, In this case, $\alpha$ is 0.5 to 1.4, and A is 10g/hour to 250Kg/hour.

On the other hand, as illustrated in Fig.2b, data (Y) output from the main polycondensation system 4b is compared with bisphenol valve in stationary state of reaction ($\beta$), and if b ($= Y-\beta$) is positive, the secound feed value 1g is controlled so adjusted to reduce bisphenol feed by $|b| \times B$ (B is a constant determined by a scale of an apparatus), and if b is negative, it is to adjusted to increase the same. In this case, $\beta$ is 15 to 40 g/l, and B is 2g/hour to 50Kg/hour.

In this way, the process according to the invention can always maintain composition of stock under optimum conditions as means for regulating prepolycondensation and main polycondensation, and thus enables the production of high quality polycarbonate which contain little impurities, will not undergo change in color tone if exposed to high temperature over a long period, and has good homogenity and high heat and steam resistances.

The invention will be described more fully for making clearer the construction and effects of it by way of examples and a comparative example.

## Example 1

Bisphenol A was dissolved in a 6% by weight sodium hydroxide to make a 13% by weight (calculated as solid matter) bisphenol A solution in sodium hydroxide.

To a reaction tube (inside diameter 8 mm, length 20mm) were continuously fed the bisphenol A solution at a rate of 43 l/minute (46 Kg/hour), methylene chloride at a rate of 19 l/hour. Concurrently gaseous phosgene was blown into the reaction tube at a rate of 4.0 kg/hour. The resulting reaction mixture leaving the reaction tube was introduced into a 30 litter reaction tank. Simultaneously 1% triethylamine aqueous solution was fed to the reaction tank at a rate of 0.5 l/hour as a catalyst. Thus polycarbonate olygomer was produced.

For continuous monitoring, chloroformate end of olygomer was determined every 10 minutes with an automatic analyzer to control the stock feeding system 1 so that the chloroformate is kept 1.1 N.

For the prepolycondensation in this example, the first valve 1f was controlled following the flow-chart of Fig.2a. Herein $\alpha$ is 1.1 and A is 40 g/hour.

To two 80 liter reaction tank connected in series were fed the thus obtained polycarbonate olygomer at a rate of 20 l/hour, a bisphenol A solution in sodium hydroxide of the same concentration as above-mentioned at a rate of 11 l/hour, a 25% by weight sodium hydroxide aqueous solution at a rate of 0.8 l/hour, a 1% by weight triethylamine solution at a rate of 0.2 l/hour, methylene chloride at a rate of 14 l/hour, and as a molecular weight regulating agent a p-t-butyl phenol solution in 4% by weight methylene chloride at a rate of 2.6 l/hour. Intended molecular weight was 23,500.

For complete termination of reaction, unreacted bisphenol A content in the polycondensation product in the aqueous phase is adjusted to be somewhat exceed, and then the stock feed system 1 was controlled so that the content became 32 g/l by monitoring every 10 minutes with a continuous automatic analyzer.

For the main polycondensation in this example, the second feed valve 1g was controlled following the flow chart of Fig.2b. Herein $\beta$ is 32 and B is 50 g/hour.

The unreacted bisphenol A in the aqueous phase was recycled into the prepolycondensation system.

The obtained polycondensation product solution was washed in sequence with alkali, acid and water, and separated into oil phase containing polycarbonate and aqueous phase.

The oil phase was processed with a thin-film evaporator and a biaxial mill to remove methylene chloride, powdered and pelletized, thus polycarbonate pellets being obtained.

For the above-mentioned continuous monitoring, an titration type automatic analyzer (Model ALT-100, Hiranuma Sangyo Co., Ltd.) was used. It was imposed continuous operation for one week.

For water washing, purified water was used. Measurement of electric conductivity after washing was carried out at a flow so adjusted that values of up to 1 μs/cm (in accordance with JIS k0102) was yielded.

The obtained results together with the later-described Examples and comparative Example are summarized in Table given below.

## Example 2

This was the same as in Example 1 except that monitoring was carried out about situation only of the content of chloroformate group of the intermediate product.

## Example 3

This was the same as in Example 1 except that monitoring was carried out about only unreacted bisphenol A in the polycondensation aqueous phase.

## Comparative Example

The end of the intermediate product, olygomer, namely, chloroformate group was determined every 4 hours by hand-operated analysis to control the stock feeding system 1.

Unreacted bisphenol A in the polycondensation product aqueous phase was determined every 8 hours by hand analysis to control the stock feeding system 1.

Table 1

| | Example | | | Comparative Example |
|---|---|---|---|---|
| | 1 | 2 | 3 | |
| Fluctuation width from target molecular weight (n x 5) | 300 | 500 | 400 | 1000 |
| Impurities in pellet (ppm) Bisphenol A | ≦20 | 40 | 30 | 90 |
| Sodium ion | ≦0.1 | ≦0.1 | ≦0.1 | 0.2 |
| Used amount of purified water for washing (l/hr) | 40 | 42 | 43 | 45 |
| Heat resistance test (Yi) | 10 | 14 | 13 | 19 |
| Steam resistance test | good | good | good | Bad White turbid |

Heat resistance test: A sample of pellet was molded (350°C) with a injection molding machine after stayed in the screw of it for 30 minutes. Then the Yi value of the molded product was determined according to JIS k7105.

Steam resistance test: After molded into a plate with a injection molding machine, the plate was exposed to steam of 120°C for 100 hours. Then the surface of the plate was evaluated by naked eye observation.

Claims

(1). A process of preparing a polycarbonate from phosgene and a bisphenol by two-step polycondensation consisting of prepolycondensation and main polycondensation, accompanied by the recycling of unreacted bisphenol, comprising forming polycarbonate olygomer by prepolycondensation of phosgene and the bisphenol in a prepolycondensation system; forming in a main polycondensation system an intended polycarbonate from said polycarbonate olygomer formed in said prepolycondensation system ; and recycling the remaining unreacted bisphenol in the polycondensation product in said main polycondensation system to said prepolycondensation system; under automatic optimum control of the feeding of phosgene and the bisphenol including recycled bisphenol to said prepolycondensation system by means of an automatic control system including at least one of automatic analyzers for determining the chloroformate end of said polycarbonate olygomer formed in said prepolycondensation system and for determining the remaining unreacted bisphenol in the polycondensaion product formed in the main polycondensation, respectively, and valves for the feeding of phosgene and the bisphenol, respectively, to said prepolycondensation system and automatically controlled in accordance with data obtained by said automatic analyzers.

(2) A process of preparing a polycarbonate as defined in claim 1 where said bisphenol is bisphenol A;

(3) A process of preparing a polycarbonate as defined in claim 1 where said automatic analyzer for detemining chloroformate end is titration type automatic analyzer.

(4) A process of preparing a polycarbonate as defined in claim 1 where said automatic analyzer for detemining the remaining unreacted bisphenol titration type automatic analyzer.

7

EP 0 306 838 A2

Fig. 1

Idemitsu Petrochemical...
Case: 880S119    2/3

Fig. 2 (a)

Fig. 2 (b)

Determine

$t < 0$

$Y - \beta = t$

$t > 0$

$t = 0$

Control bisphenol feed —

Control is not carried out

Control bisphenol feed

$|t| \times B$

increase

$|t| \times B$

decrease

End